# EUROPEAN PATENT APPLICATION

(11) **EP 4 539 309 A1**
(43) Date of publication of application: **16.04.2025**
(21) Application number: 23818226.5
(22) Date of filing: 09.05.2023
(51) Int. Cl.: H02K 11/33

(54) **UNIT**

(30) Priority: 07.06.2022 JP 2022092132
(71) Applicant: Jatco Ltd., Shizuoka 417-8585 (JP)
(72) Inventor: MAEDA, Atsushi, Fuji-shi, Shizuoka 417-8585 (JP); SUWABAYASHI, Akira, Fuji-shi, Shizuoka 417-8585 (JP); SHOICHI, Minoru, Fuji-shi, Shizuoka 417-8585 (JP)
(74) Representative: Hoefer & Partner Patentanwälte mbB
(86) International application number: PCT/JP2023/017458
(87) International publication number: WO 2023/238578

(57) **Abstract**

[PROBLEM] To provide a unit that can be reduced in size.

[SOLUTION] The unit includes a capacitor; an electric circuit electrically connected to the capacitor, a rotating electrical machine electrically connected to the electric circuit, and a shaft connected downstream of the rotating electrical machine in terms of power. The shaft does not overlap the rotating electrical machine when viewed in a first radial direction, one of the capacitor and the electric circuit overlaps the rotating electrical machine when viewed in the first radial direction, and the other of the capacitor and the electric circuit overlaps the shaft when viewed in the first radial direction.

## Description

### TECHNICAL FIELD

The present invention relates to a unit.

### BACKGROUND ART

Patent Document 1 discloses a unit including an inverter.

### PRIOR ART DOCUMENT

### PATENT DOCUMENT

Patent Document 1: JP 2022-33113A

### SUMMARY OF INVENTION

### PROBLEM TO BE SOLVED BY THE INVENTION

In the unit described in Patent Document 1, since a rotating electrical machine overlaps a shaft located between the rotating electrical machine and an inverter in a horizontal direction, the inverter cannot be disposed close to the rotating electrical machine. Therefore, the unit cannot be reduced in size.

The present invention has been made in view of such a problem, and an object of the present invention is to provide a unit that can be reduced in size.

### MEANS FOR SOLVING THE PROBLEM

According to an embodiment of the present invention, a unit is provided. The unit includes: a capacitor; an electric circuit electrically connected to the capacitor; a rotating electrical machine electrically connected to the electric circuit; and a shaft connected downstream of the rotating electrical machine in terms of power. The shaft does not overlap the rotating electrical machine when viewed in a first radial direction, one of the capacitor and the electric circuit overlaps the rotating electrical machine when viewed in the first radial direction, and the other of the capacitor and the electric circuit overlaps the shaft when viewed in the first radial direction.

### EFFECT OF THE INVENTION

According to an embodiment of the present invention, a unit can be reduced in size.

### BRIEF DESCRIPTION OF DRAWINGS

[FIG. 1] FIG. 1 is a perspective view illustrating a unit (in a state in which a fourth case is removed) according to the present embodiment.
[FIG. 2] FIG. 2 is a cross-sectional view illustrating the unit according to the present embodiment.
[FIG. 3] FIG. 3 is a perspective view illustrating the fourth case.
[FIG. 4] FIG. 4 is a cross-sectional view illustrating a unit according to the modification.

### DESCRIPTION OF EMBODIMENTS

Hereinafter, an embodiment of the present invention (hereinafter, simply referred to as the present embodiment) will be described with reference to the accompanying drawings.

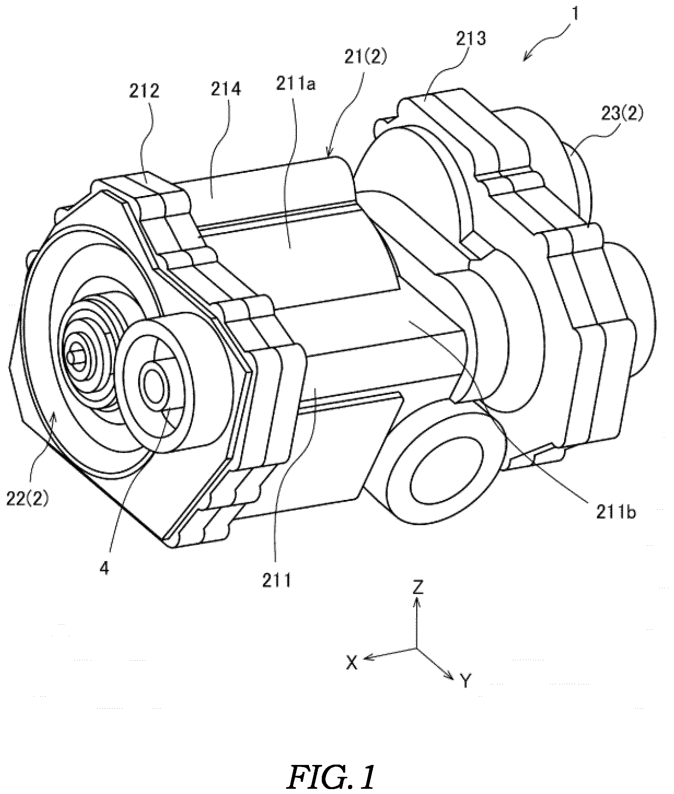

First, a unit 1 according to the present embodiment will be described with reference to FIGS. 1 to 3. In the present specification, the same elements are denoted by the same reference numerals throughout the drawings.

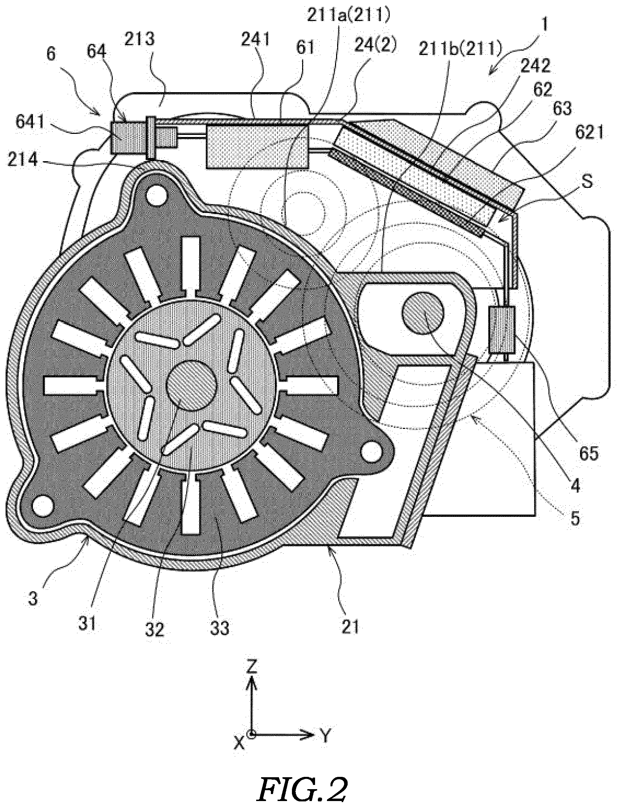

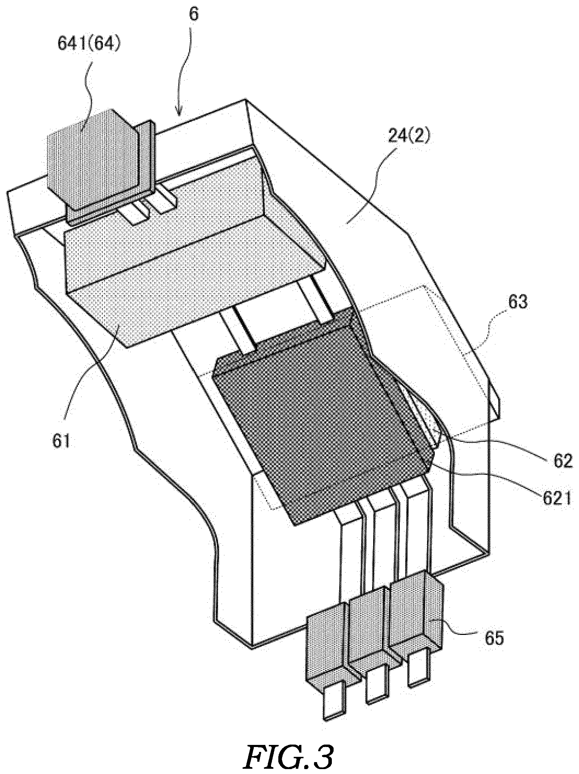

FIG. 1 is a perspective view illustrating the unit 1 (in a state in which a fourth case 24 is removed) according to the present embodiment. FIG. 2 is a cross-sectional view illustrating the unit 1 according to the present embodiment. FIG. 3 is a perspective view illustrating the fourth case 24.

The unit 1 illustrated in FIGS. 1 to 3 is used to drive driving wheels (not illustrated) of a vehicle, but is not limited thereto, and may be used, for example, to drive an electrical product. The unit 1 can also be referred to as a motor unit (a unit including at least a motor), a power transmission device (a device including at least a power transmission mechanism (for example, a gear mechanism and/or a differential gear mechanism)), or the like. The device (unit) including the motor and the power transmission mechanism belongs to concepts of both the motor unit and the power transmission device. Specifically, the unit 1 includes a housing 2, a motor 3 serving as a rotating electrical machine, a drive shaft 4 serving as a shaft, a reduction gear group 5 as a gear mechanism, and an inverter 6.

The housing 2 is an accommodating member that accommodates the motor 3, the drive shaft 4, the reduction gear group 5, and the inverter 6. The housing 2 includes one or more cases. Specifically, the housing 2 includes a first case 21, a second case 22, and a third case 23 that serve as a case member (specifically, a first case member), and a fourth case 24 that serves as a case member (specifically, a second case member).

The first case 21 is a 3in1 case. 3in1 means a form in which a part of a motor case, which accommodates the motor 3 and the drive shaft 4, and a part of an inverter case, which accommodates the inverter 6, are integrally formed.

The first case 21 includes: a cylinder 211 that is provided to be open at least at a front end that is one end; a front flange 212 that is provided to protrude toward an outer peripheral side at the front end of the cylinder 211; a back flange 213 that is provided to protrude toward an outer peripheral side at a rear end that is the other end of the cylinder 211; and a protruding portion 214 that extends along an axial direction X and protrudes toward an outer peripheral side in the cylinder 211 serving as an outer peripheral side of the motor 3. Here, the axial direction X means an axial direction X of a rotation shaft of a component that constitutes the unit 1. Examples of the components include the motor 3, the gear mechanism, and the differential gear mechanism.

The cylinder 211 has: an arc portion 211a whose one end is continuous with the protruding portion 214 and in which a part of the motor 3 is accommodated; and a flat portion 211b that is continuous with the other end of the protruding portion 214 and extends along a horizontal direction Y (see FIG. 2) that is a second radial direction. The flat portion 211b and the drive shaft 4 are aligned in a vertical direction Z (see FIG. 2) that is a first radial direction intersecting (specifically, orthogonal to) the horizontal direction Y.

The second case 22 is coupled to the front end of the cylinder 211 of the first case 21. Specifically, an outer periphery of the second case 22 is coupled to the front flange 212 by bolting. Further, the second case 22 supports, via a bearing (not illustrated), both a front end, which is one end, of a rotation shaft 31 (described later) of the motor 3, and a front end, which is one end, of the drive shaft 4.

The motor 3 is a rotating electrical machine having an electric motor function and/or a generator function. Further, the motor 3 includes: a rotation shaft 31 that is rotatably supported by the first case 21 and the second case 22 via the bearing (not illustrated); a rotor 32 that is located on an outer peripheral side of the rotation shaft 31 and rotates integrally with the rotation shaft 31; and a stator 33 that is fixed to an inner peripheral side of the cylinder 211 to be located on an outer peripheral side of the rotor 32.

The drive shaft 4 rotates integrally with the drive wheels of the vehicle. The drive shaft 4 is connected, in terms of power, downstream of the motor 3 via the reduction gear group 5. That is, this means that the motor 3 and the drive shaft 4 are connected to be capable of transmitting power. A power input side is upstream, and a power output side is downstream. The drive shaft 4 is rotatably supported by the first case 21 and the second case 22 via the bearing (not illustrated).

As illustrated in FIG. 2, the drive shaft 4 does not overlap the motor 3 (specifically, the rotation shaft 31, the rotor 32, and the stator 33) when viewed in the first radial direction. That is, the drive shaft 4 is offset from the motor 3 when viewed in the first radial direction. That is, the drive shaft 4 and the motor 3 are not aligned in the vertical direction Z.

The third case 23 accommodates the reduction gear group 5. The third case 23 includes a bottomed cylinder. The bottomed cylinder is open at a front end that is one end and is closed at a rear end that is the other end. The third case 23 is coupled to the rear end of the cylinder 211. Specifically, an outer periphery of the front end of the third case 23 is coupled to the back flange 213 by bolting.

The reduction gear group 5 has a portion that is offset from the motor 3 when viewed in the axial direction. That is, the reduction gear group 5 has a portion that does not overlap the motor 3 when viewed in the axial direction. That is, the reduction gear group 5 has a portion that is not aligned with the motor 3 in the axial direction X.

The reduction gear group 5 is the power transmission mechanism that reduces the power of the motor 3 and transmits the reduced power to the drive shaft 4, and the reduction gear group 5 includes a plurality of gears. The reduction gear group 5 is connected downstream of the motor 3 in terms of power and connected upstream of the drive shaft 4 in terms of power.

As illustrated in FIGS. 2 and 3, the fourth case 24 constitutes the other part of the inverter case. The inverter 6 is attached to the fourth case 24. The fourth case 24 is coupled to a part of the outer periphery of the cylinder 211 (specifically, the arc portion 211a and the flat portion 211b) by bolting. A part of the inverter 6 is incorporated in an accommodation region S formed by connecting the first case 21 and the fourth case 24.

The fourth case 24 includes: a first attaching unit 241 to which one of a capacitor 61 and an electric circuit 62, which are (described later), of the inverter 6 is attached; and a second attaching unit 242 to which the other of the capacitor 61 and the electric circuit 62, which are described later, of the inverter 6 is attached.

In the present embodiment, in a state in which the first case 21 and the fourth case 24 are coupled, the first attaching unit 241 is a plate extending along the horizontal direction Y, and the second attaching unit 242 is a plate inclined with respect to the horizontal direction Y when viewed from the front. The first attaching unit 241 and the second attaching unit 242 face the arc portion 211a and the flat portion 211b, respectively.

In the state in which the first case 21 and the fourth case 24 are coupled, the fourth case 24 has a portion (specifically, the first attaching unit 241 and the second attaching unit 242) that overlaps with the third case 23 that constitutes the gear mechanism when viewed in the axial direction. That is, the fourth case 24 and the third case 23 are aligned in the axial direction X. Accordingly, since the first attaching unit 241 and the second attaching unit 242 of the fourth case 24 can be prevented from protruding from the third case 23 when viewed from the front, the entire unit 1 can be reduced in size in a radial direction.

The inverter 6 is a controller that controls driving of the motor 3. The inverter 6 includes the capacitor 61, the electric circuit 62, a cooler 63, a power connector 64, and connection wirings 65.

The capacitor 61 (specifically, a smoothing capacitor) is an electronic component that stores and releases electricity. The capacitor 61 is attached to a back surface of the first attaching unit 241 to extend along the horizontal direction Y when viewed from the front.

The electric circuit 62 is electrically connected to the capacitor 61 and is electrically connected, via the connection wirings 65, to the motor 3. The electric circuit 62 is attached to a back surface of the second attaching unit 242. Further, the electric circuit 62 includes a PWR board 621 serving as a board that is disposed to be inclined with respect to the horizontal direction Y (that is, the capacitor 61) when viewed from the front.

Accordingly, since the second attaching unit 242 to which the PWR board 621 is attached can also be disposed to be inclined with respect to the horizontal direction Y, the unit 1 can be reduced in size in the horizontal direction Y as compared with a configuration in which the capacitor 61 and the PWR board 621 of the electric circuit 62 are disposed to be aligned in the horizontal direction Y. Further, an inclined portion or a stepped portion may be easily formed in the unit 1, and a layout property of the entire unit 1 can be improved.

The cooler 63 is a member that cools the PWR board 621. The cooler 63 is attached to a surface of the second attaching unit 242. Accordingly, it is easier to dispose a cooling water passage of the cooler 63 as compared with a configuration in which the cooler 63 is attached to the back surface of the second attaching unit 242. From a viewpoint of integrating the cooling water passages, it is preferable that a unit oil cooler is also disposed on the surface of the second attaching unit 242.

As illustrated in FIG. 2, in the present embodiment, the capacitor 61 overlaps the motor 3 when viewed in the first radial direction, and when viewed in the first radial direction, the electric circuit 62 overlaps the drive shaft 4 that is not aligned with the motor 3 in the vertical direction Z. That is, the capacitor 61 and the motor 3 are aligned in the vertical direction Z, and the electric circuit 62 and the drive shaft 4 that is not aligned with the motor 3 in the vertical direction Z are aligned in the vertical direction Z.

Accordingly, spaces around the motor 3 and the drive shaft 4 in the radial direction can be effectively utilized by not locating the drive shaft 4 between the motor 3 and the inverter 6 when viewed in the first radial direction (that is, not locating the drive shaft 4 between the motor 3 and the inverter 6 when viewed from the first radial direction) and by disposing the capacitor 61 and the electric circuit 62 of the inverter 6 close to the motor 3 and the drive shaft 4, respectively, and therefore, the entire unit 1 can be reduced in size in the vertical direction Z.

In the present embodiment, the capacitor 61 and the electric circuit 62 are provided to overlap the motor 3 and the drive shaft 4, respectively, in the first radial direction, but the invention is not limited to this, and for example, the capacitor 61 and the electric circuit 62 may be provided to overlap the drive shaft 4 and the motor 3, respectively.

In this case, the electric circuit 62 is attached to the back surface of the first attaching unit 241, and the capacitor 61 is attached to the back surface of the second attaching unit 242.

The capacitor 61 and the electric circuit 62 are offset from the reduction gear group 5 when viewed in the first radial direction. That is, the capacitor 61 and the electric circuit 62 do not overlap the reduction gear group 5 when viewed in the first radial direction. That is, the capacitor 61 and the electric circuit 62 are not aligned with the reduction gear group 5 in the vertical direction Z.

The capacitor 61 and the electric circuit 62 each have a portion that overlaps the reduction gear group 5 when viewed in the axial direction. That is, the capacitor 61 and the electric circuit 62 each have a portion that is aligned with the reduction gear group 5 in the axial direction X.

Accordingly, by effectively utilizing a space of a stepped portion formed by the motor 3 and the reduction gear group 5 to dispose the capacitor 61 and the electric circuit 62 in the space of the stepped portion, it is easier to obtain a layout by which the unit 1 can be reduced in size.

As illustrated in FIG. 2, the power connector 64 electrically connects a power source (not illustrated) and the capacitor 61. The capacitor 61 is disposed between the power connector 64 and the electric circuit 62 when viewed in the second radial direction. That is, the capacitor 61 is located between the power connector 64 and the electric circuit 62 when viewed from the horizontal direction Y.

Accordingly, since an arrangement can be obtained in consideration of electrical flow, a wiring arrangement can be simplified.

The power connector 64 has a tip portion 641 that protrudes from the fourth case 24 in a direction away from the capacitor 61 (leftward direction in FIG. 2). As illustrated in FIG. 2, the protruding portion 214 is disposed between the tip portion 641 of the power connector 64 and the capacitor 61 when viewed in the second radial direction. That is, the protruding portion 214 is located between the tip portion 641 and the capacitor 61 when viewed from the horizontal direction Y.

Accordingly, by offsetting the tip portion 641 of the power connector 64 from the protruding portion 214 when viewed in the first radial direction, an influence of interference between the power connector 64 and the protruding portion 214 when the fourth case 24 is connected to the first case 21 can be reduced.

The connection wirings 65 electrically connect the PWR board 621 of the electric circuit 62 and the motor 3. One end of the connection wiring 65 is connected to an end portion of the PWR board 621 that is separated from the capacitor 61, and the other end of the connection wiring 65 is connected to the connector of the motor 3.

### (Modification)

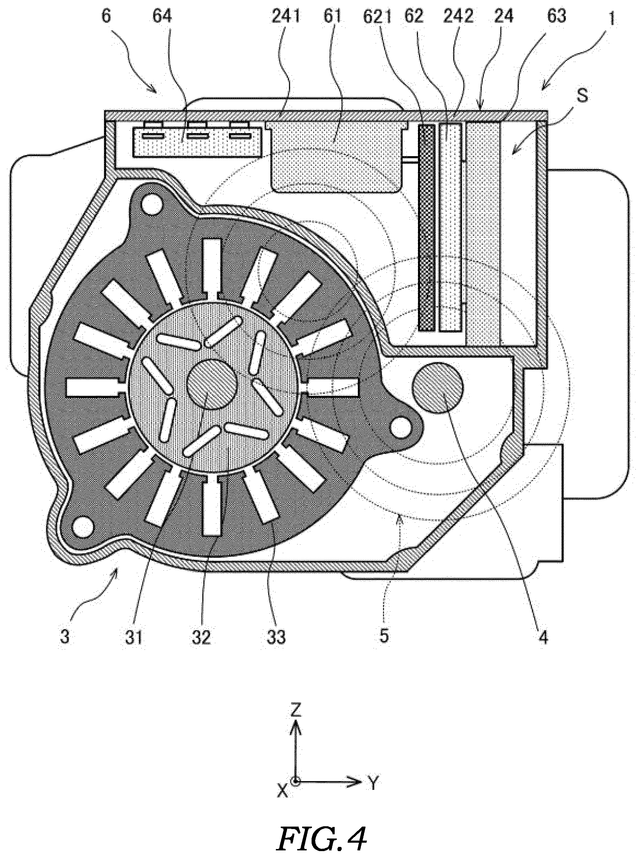

Next, the unit 1 according to the modification will be described with reference to FIG. 4. In the present modification, the description of the same points as those of the above embodiment will be omitted, and differences from the above embodiment will be mainly described.

FIG. 4 is a cross-sectional view illustrating the unit 1 according to the modification.

In the above embodiment, the electric circuit 62 is disposed to be inclined with respect to the capacitor 61, but the invention is not limited to this, and may be disposed to extend along the vertical direction Z, for example, as illustrated in FIG. 4. In this case, the second attaching unit 242 to which the electric circuit 62 is attached is formed to extend along the horizontal direction Y from the first attaching unit 241 without being inclined with respect to the horizontal direction Y.

In this case, the drive shaft 4 overlaps the rotation shaft 31 of the motor 3 when viewed in the second radial direction. That is, the drive shaft 4 and the rotation shaft 31 of the motor 3 are aligned in the horizontal direction Y. Accordingly, a larger installation space in the vertical direction Z for the electric circuit 62 can be secured as compared with the above embodiment, and therefore, even when the electric circuit 62 is disposed to extend along the vertical direction Z, the entire unit 1 can be reduced in size in the radial direction.

In the present modification, the capacitor 61 is disposed between the power connector 64 and the electric circuit 62 as in the above embodiment when viewed in the second radial direction, but the electric circuit 62 is disposed to extend along the vertical direction Z. Therefore, as compared with the above embodiment, both the capacitor 61 and the power connector 64 can be disposed closer to the drive shaft 4 (to the right in FIG. 4), and there is no need to make the tip portion 641 (see FIG. 2) of the power connector 64 protrude from the fourth case 24 as in the above embodiment. As a result, the entire power connector 64 can be incorporated in the fourth case 24, and the entire unit 1 can be further reduced in size in the radial direction.

A dimension of the electric circuit 62 in the vertical direction Z is larger than a dimension of the capacitor 61 in the horizontal direction Y when viewed from the front. Accordingly, a utilization rate of the accommodation region S formed by connecting the first case 21 and the fourth case 24 can be improved.

The cooler 63 is disposed in the accommodation region S to be adjacent to the electric circuit 62 and extend along the vertical direction Z. The electric circuit 62 is disposed between the capacitor 61 and the cooler 63 when viewed in the second radial direction.

### (Functions and Effects)

Next, main functions and effects of the embodiment and the modification will be described.
(1) The unit 1 includes: the capacitor 61; the electric circuit 62 electrically connected to the capacitor 61; the motor 3 (rotating electrical machine) electrically connected to the electric circuit 62; and the drive shaft 4 (shaft) connected downstream of the motor 3 (rotating electrical machine) in terms of power. The drive shaft 4 (shaft) does not overlap the motor 3 (rotating electrical machine) when viewed in a first radial direction, the capacitor 61 overlaps the motor 3 (rotating electrical machine) when viewed in the first radial direction, and the electric circuit 62 overlaps the drive shaft 4 (shaft) when viewed in the first radial direction.

According to this configuration, the spaces around the motor 3 and the drive shaft 4 in the radial direction can be effectively utilized by not locating the drive shaft 4 between the motor 3 and the inverter 6 when viewed in the first radial direction and by disposing the capacitor 61 and the electric circuit 62 of the inverter 6 close to the motor 3 and the drive shaft 4, respectively, and therefore, the entire unit 1 can be reduced in size in the vertical direction Z.

(2) The drive shaft 4 (shaft) is connected, in terms of power, to the motor 3 (rotating electrical machine) via a reduction gear group 5 (gear mechanism), the reduction gear group 5 (gear mechanism) has the portion that is offset from the motor 3 (rotating electrical machine) when viewed in the axial direction, the capacitor 61 and the electric circuit 62 are offset from the reduction gear group 5 (gear mechanism) when viewed in the first radial direction, and the capacitor 61 and the electric circuit 62 each have the portion that overlaps the reduction gear group 5 (gear mechanism) when viewed in the axial direction.

According to this configuration, by effectively utilizing the space of the stepped portion formed by the motor 3 and the reduction gear group 5 to dispose the capacitor 61 and the electric circuit 62 in the space of the stepped portion, it is easier to obtain the layout by which the unit 1 can be reduced in size.

(3) The electric circuit 62 includes the PWR board 621 (board), and the PWR board 621 (board) is disposed to be inclined with respect to the capacitor 61.

According to this configuration, since the second attaching unit 242 to which the PWR board 621 is attached can also be disposed to be inclined with respect to the horizontal direction Y, the unit 1 can be reduced in size in the horizontal direction Y as compared with the configuration in which the capacitor 61 and the PWR board 621 of the electric circuit 62 are disposed to be aligned in the horizontal direction Y. Further, the inclined portion or the stepped portion may be easily formed in the unit 1, and the layout property of the entire unit 1 can be improved.

(4) The unit 1 further includes the power connector 64 electrically connected to the capacitor 61, and the capacitor 61 is disposed between the power connector 64 and the electric circuit 62 when viewed in the second radial direction intersecting the vertical direction Z (first radial direction).

According to this configuration, since an arrangement can be obtained in consideration of the electrical flow, the wiring arrangement can be simplified.

(5) The unit 1 further includes the first case 21 (case member) that accommodates the motor 3 (rotating electrical machine), the first case 21 (case member) has the protruding portion 214 that protrudes toward the outer peripheral side on the outer peripheral side of the motor 3 (rotating electrical machine), and the protruding portion 214 is disposed between the tip portion 641 of the power connector 64 and the capacitor 61 when viewed in the second radial direction.

According to this configuration, by offsetting the tip portion 641 of the power connector 64 from the protruding portion 214 when viewed in the first radial direction, the influence of interference between the power connector 64 and the protruding portion 214 when the fourth case 24 is connected to the first case 21 can be reduced.

(6) The drive shaft 4 (shaft) overlaps the rotation shaft 31 of the motor 3 (rotating electrical machine) when viewed in the second radial direction orthogonal to the vertical direction Z (first radial direction), and the electric circuit 62 is disposed to extend along the vertical direction Z (first radial direction).

According to this configuration, a larger installation space in the vertical direction Z for the electric circuit 62 can be secured as compared with the above embodiment, and therefore, even when the electric circuit 62 is disposed to extend along the vertical direction Z, the entire unit 1 can be reduced in size in the radial direction.

(7) The dimension of the electric circuit 62 in the vertical direction Z (first radial direction) is larger than the dimension of the capacitor 61 in the horizontal direction Y (second radial direction) when viewed from the front.

According to this configuration, the utilization rate of the accommodation region S formed by connecting the first case 21 and the fourth case 24 can be improved.

Although the embodiment of the present invention has been described above, the above embodiment is merely a part of application examples of the present invention, and is not intended to limit the technical scope of the present invention to the specific configurations of the above embodiment.

### DESCRIPTION OF REFERENCE SIGNS

- 1: unit
- 3: motor (rotating electrical machine)
- 4: shaft (drive shaft)
- 5: reduction gear group (gear mechanism)
- 21: first case (case member)
- 61: capacitor
- 62: electric circuit
- 64: power connector
- 214: protruding portion
- 621: PWR board (board)
- 641: tip portion

## Claims

1. A unit comprising:
a capacitor;
an electric circuit electrically connected to the capacitor;
a rotating electrical machine electrically connected to the electric circuit; and
a shaft connected downstream of the rotating electrical machine in terms of power, wherein
the shaft does not overlap the rotating electrical machine when viewed in a first radial direction,
one of the capacitor and the electric circuit overlaps the rotating electrical machine when viewed in the first radial direction, and
the other of the capacitor and the electric circuit overlaps the shaft when viewed in the first radial direction.

2. The unit according to claim 1, wherein
the shaft is connected, in terms of power, to the rotating electrical machine via a gear mechanism,
the gear mechanism has a portion that is offset from the rotating electrical machine when viewed in an axial direction,
the capacitor and the electric circuit are offset from the gear mechanism when viewed in the first radial direction, and
the capacitor and the electric circuit each have a portion that overlaps the gear mechanism when viewed in the axial direction.

3. The unit according to claim 1, wherein
the electric circuit includes a board, and
the board is disposed to be inclined with respect to the capacitor.

4. The unit according to any one of claims 1 to 3, further comprising:
a power connector electrically connected to the capacitor, wherein
the capacitor is disposed between the power connector and the electric circuit when viewed in a second radial direction intersecting the first radial direction.

5. The unit according to claim 4, further comprising:
a case member that accommodates the rotating electrical machine, wherein
the case member has a protruding portion that protrudes toward an outer peripheral side on an outer peripheral side of the rotating electrical machine, and
the protruding portion is disposed between a tip portion of the power connector and the capacitor when viewed in the second radial direction.

6. The unit according to claim 1 or 2, wherein
the shaft overlaps a rotation shaft of the rotating electrical machine when viewed in a second radial direction orthogonal to the first radial direction, and
the other of the capacitor and the electric circuit is disposed to extend along the first radial direction.

7. The unit according to claim 6, wherein
a dimension of the other of the capacitor and the electric circuit in the first radial direction is larger than a dimension of one of the capacitor and the electric circuit in the second radial direction when viewed from the front.
